# EUROPÄISCHE PATENTSCHRIFT

(11) **EP 2 520 872 B1**
(45) Veröffentlichungstag und Bekanntmachung des Hinweises auf die Patenterteilung: **06.08.2014**
(21) Anmeldenummer: 11165000.8
(22) Anmeldetag: 05.05.2011
(51) Int. Cl.: F24J 2/07

(54) **Solarturmkraftwerk-Solarempfänger**
Solar tower power plant - solar receiver
Récepteur solaire pour centrale à tour solaire

(43) Veröffentlichungstag der Anmeldung: 07.11.2012
(73) Patentinhaber: Solar Millennium AG, 91052 Erlangen (DE)
(72) Erfinder: Garbrecht, Oliver, 52064 Aachen (DE)
(74) Vertreter: Eberlein, Jasper

(56) Entgegenhaltungen:
- CH-A5- 581 812
- DE-A1- 4 418 951
- US-A- 3 979 597

## Beschreibung

Die Erfindung bezieht sich auf einen Solarempfänger eines thermischen Solarturmkraftwerks.

Bei einem thermischen Solarturmkraftwerk wird die Sonnenstrahlung durch ein Heliostaten-Feld, das aus einer Vielzahl nachgeführter Spiegel besteht, auf den zentralen Solarempfänger gerichtet, der in der Regel von einem Turm in einer Höhe von 50 m bis 300 m gehalten wird. Der Solarempfänger weist eine Empfängerstruktur auf, durch die ein Wärmeträger-Fluid fließt, das beispielsweise aus einem Öl, einer Salzschmelze, Wasser oder auch aus einem Gas bestehen kann. Der Wärmeenergie-Anteil der Sonnenstrahlung wird von der Empfängerstruktur absorbiert, die die Wärme auf das Wärmeträger-Fluid überträgt.

Die Empfängerstrukturen nach dem Stand der Technik weisen in der Regel eine zylindrische Grundform auf und werden von rohrförmigen Leitungen gebildet. Derartige Empfängerstrukturen weisen insbesondere in der sogenannten "externen" Bauform, bei der die Empfängerstruktur von seiner distalen Seite aus mit der Sonnenstrahlung beaufschlagt wird, erhebliche Strahlungs- und Konvektionsverluste auf.

Aus US 3,979,597 sind Solarempfänger eines thermischen Kraftwerks bekannt, das eine Vielzahl gleichförmiger Absorberelemente aufweist. An der Innenseite der Absorberwand eines Absorberelements fließt als Wärmeträger-Fluid Luft von der Basis des kegelförmigen Absorberelements zu seiner Spitze und von dort zurück wieder zur Basis. Der Fluidraum, durch den die Luft fließt, grenzt nicht unmittelbar an die Absorberwand an.

Aus DE 4418951 A1 ist ein Solarkraftwerk mit einem Solarempfänger bekannt, der mehrere wabenförmige Absorberelemente aufweist, die von Luft als Wärmeträger umspült werden.

Aufgabe der Erfindung ist es demgegenüber, einen Solarturmkraftwerk-Solarempfänger mit verbessertem Wirkungsgrad zu schaffen.

Diese Aufgabe wird erfindungsgemäß gelöst mit einem Solarempfänger mit den Merkmalen des Anspruchs 1.

Der erfindungsgemäße Solarempfänger weist eine Empfängerstruktur mit mehreren gleichförmigen, also zueinander identischen Absorberelementen auf. Jedes Absorberelement weist eine Absorberwand auf, deren konvexe Außenseite die Sonnenstrahlung absorbiert. Die Absorberwand ist also in Richtung Heliostaten-Feld nach außen gewölbt ausgebildet. Unter einer Wölbung bzw. Konvexivität ist vorliegend jede Form zu verstehen, bei der sich eine Ausstülpung in Bezug auf eine Grundfläche ergibt, auf der alle Absorberelemente angebracht sind. An mindestens einer Stelle ist die Absorberwand stärker gekrümmt als die Grundfläche der Empfängerstruktur, auf der die Absorberelemente mit ihrer Basis angebracht sind. Die Absorberwand kann grundsätzlich sphärisch, elliptisch, rund und/oder auch eckig und mehrseitig ausgebildet sein. Wichtig ist, dass die Absorberwände benachbarter Absorberelemente mit einem Teil ihrer Absorberwand-Fläche jeweils einander zugeneigt sind. Hierdurch wird bewirkt, dass ein Teil der Eigen-Wärmeabstrahlung einer Absorberwand auf die Absorberwand eines benachbarten Absorberelementes gerichtet ist, um dort zum größten Teil wieder absorbiert werden zu können. Die Absorberelemente bilden auf diese Weise Strahlungs-Fallen für die Wärmestrahlung. Hierdurch werden die Gesamt-Strahfungsverluste der Empfängerstruktur verringert.

Auch die von der Absorberwand reflektierte Wärmestrahlung wird teilweise auf die Absorberwand eines benachbarten Absorberelements gerichtet, und dort teilweise absorbiert. Hierdurch werden auch die Reflektionsverluste verringert.

Durch die konvexe Gestalt der Absorberwand werden zwischen den benachbarten Absorberelementen jeweils Täler gebildet, in denen die Konvektion erheblich verringert ist. Hierdurch können, je nach Ausrichtung der Täler, auch die Konvektionsverluste erheblich verringert werden. Durch die konvexe Gestalt der Absorberwand der Absorberelemente wird die gesamte Übertragungsfläche, die für die Übertragung der Wärmestrahlung in das Wärmeträger-Fluid zur Verfügung steht, erheblich vergrößert. Durch die besondere Struktur der Empfängerstruktur wird jedoch sichergestellt, dass die Verluste nicht in gleichem Maße steigen wie die Gewinne.

Innenseitig der Absorberwand ist eine Fluid-Einlassöffnung vorgesehen. Die Öffnungsfläche der Einfassöffnung ist klein im Verhältnis zur Fläche der Absorberwand, und beträgt bevorzugt höchstens die Hälfte, und besonders bevorzugt höchstens 1/10 der Gesamtfläche der Absorberwand.

Proximal der Absorberwand und unmittelbar angrenzend an die Absorberwand ist ein Fluid- Abflussraum vorgesehen, durch den das Wärmeträger-Fluid von der Einlassöffnung kommend entlang der Absorberwand zu der Basis der Absorberwand abfließen kann, wo es wieder In einer Abflussleitung zusammenläuft. Bevorzugt grenzt die gesamte Innenseite der Absorberwand an den Abflussraum, so dass über die gesamte Fläche der Absorberwand Wärme unmittelbar auf das Wärmeträger-Fluid in dem Abflussraum übertragen werden kann. Insgesamt kann die Gesamt-Absorptionsfläche der Empfängerstruktur hierdurch erheblich vergrößert werden, wodurch der Gesamt-Wirkungsgrad des Solarempfängers verbessert wird. Der Abflussraum ist proximal durch eine Innenwand begrenzt, die bevorzugt ungefähr parallel zu der Absorberwand angeordnet ist.

Grundsätzlich kann die Empfängerstruktur vorliegend einen sogenannten internen oder einen sogenannten externen Solarempfänger bilden. Besonders geeignet ist die Empfängerstruktur mit den gleichförmigen Absorberelementen jedoch für einen externen Solarempfänger, da hier die Reflexions-, Strahlungs- und Konvektionsverluste einen hohen Anteil an den Gesamtverlusten ausmachen.

Die Fluid-Einlassöffnung ist im Bereich des Scheitelpunkts der konvexen Absorberwand angeordnet, und ist besonders bevorzugt ungefähr in der Mitte des gesamten Abflussraums angeordnet. Der Scheitelpunkt ist in der Regel der geometrische Mittelpunkt der Absorberwand. Der Abflussraum hat, ebenso wie die Absorberwand, beispielsweise eine sphärische, elliptische, kegelige oder pyramidenartige Form, wobei die Fluid-Einlassöffnung im Zentrum des Abflussraums angeordnet ist. Das Wärmeträger-Fluid fließt von der Fluid-Einlassöffnung aus in alle Umfangsrichtungen Richtung Absorberwand-Basis ab. Hierdurch wird eine wird eine über den Absorberwand- Umfang relativ homogene Wärmeübertragung auf das Wärmeträger-Fluid erreicht.

Durch die Wahl einer einfachen symmetrischen Form für die Absorberwand, beispielsweise eine achsensymmetrische Form, können die Absorberwand und andere Bauelemente der Empfängerstruktur relativ einfach industriell und damit relativ preiswert hergestellt werden. Dadurch, dass auch die Schattenseite der Absorberwand, die nicht oder nur wenig mit Sonnenlicht direkt beaufschlagt wird, von den jeweils gegenüberliegenden Absorberwänden erwärmt wird, ist die Eigentemperatur der Absorberwand über den Umfang relativ homogen. Hierdurch werden extreme Spannungen, die materialermüdend bzw. zerstörend wirken, in der Absorberwand vermieden.

Der kälteste Bereich der Absorberwand wird in aller Regel in der Nähe des Scheitelpunktes bzw. ihres geometrischen Mittelpunktes liegen. Das Wärmeträger-Fluid tritt hier relativ kalt aus der Einlassöffnung aus. Durch das Aufprallen des aus der Einlassöffnung ausströmenden Kühlmittel-Fluids auf die Innenseite der Absorberwand wird an dieser Stelle ein besonders guter konvektiver Wärmeübergang erreicht, so dass der Scheitelpunkt der Absorberwand gut gekühlt wird. Durch die relativ niedrige Temperatur der Absorberwand in dem Scheitelpunkt-Bereich werden auch die Strahlungs- und Konvektionsverluste, die in diesem Bereich generiert werden, relativ gering gehalten. Aufgrund der Flussrichtung des Wärmeträger- Fluids von der zentralen Fluid-Einlassöffnung in Richtung Basis haben das Wärmeträger-Fluid und die Absorberwand in Basisnähe daher ihre höchste Temperatur.

Gemäß einer bevorzugten Ausgestaltung weist die Absorberwand innenseitig Kühlstege auf, die in den Abflussraum proximal hineinragen, und die bevorzugt schraubenförmig oder axial orientiert sind. Durch die Kühlstege wird zum Einen die Wärmeübertragungs-Oberfläche erheblich vergrößert, so dass die Wärmeübertragung von der Absorberwand zu dem Wärmeträger-Fluid verbessert wird. Ferner kann durch die Kühlstege insbesondere im basisnahen Bereich der Strömungsquerschnitt des Fluid-Abflussraums verringert werden, so dass die Flussgeschwindigkeit des Wärmeträger- Fluids in diesem Bereich gezielt erhöht werden kann.

Vorzugsweise ist der Grundriss der Absorberwand-Basis gleichseitig sechseckig, wobei die Absorberwand bevorzugt als eine sechsseitige Pyramide ausgebildet ist. Der sechsseitige Grundriss der Absorberwand-Basis erlaubt eine wabenförmige und lückenlose Ausbildung der Empfängerstruktur. Gegenüber einem gleichseitig dreieckigen oder einem quadratischen Grundriss, der ebenfalls eine lückenlose Anordnung der Empfängerstruktur erlauben würde, bietet der sechsseitige Grundriss den Vorteil, dass die aneinander anschließenden Täler zwischen den Absorberelementen keine gerade Linie bilden, sondern stets zickzackartig verlaufen. Hierdurch wird an der Empfängerstruktur in allen Richtungen ein relativ hoher Strömungswiderstand realisiert, wodurch wiederum die Konvektions-Verluste relativ gering gehalten werden können.

Gemäß einer bevorzugten Ausgestaltung sind die die Einlassöffnung aufweisende Einlassleitung und der gesamte Abflussraum aller Absorberelemente in Flussrichtung des Wärmeträger-Fluid abwärts nach unten geneigt. Auch ohne Unterstützung einer Pumpe fließt das flüssige Wärmeträger-Fluid aufgrund der Neigung aller fluidführenden Teile durch die Schwerkraft selbsttätig und vollständig aus dem Absorberelement durch seinen Auslass heraus. Dies ist insbesondere dann von Bedeutung, wenn als Wärmeträger-Fluid eine Salzschmelze mit einem Schmelzpunkt von über 200 °C verwendet wird Sobald sich der Eintrag an Sonnenstrahlung verringert, beispielsweise bei einem längeren Wolkendurchzug oder bei Sonnenuntergang, müssen alle Absorberelemente der Empfängerstruktur schnellstmöglich entleert werden können, insbesondere auch dann, wenn die hierfür verantwortlichen Pumpen versagen sollten.

Vorzugsweise sind die Absorberelemente fluidisch parallel zueinander angeordnet. Es können alle Absorberelemente zueinander parallel angeordnet sein, Alternativ oder ergänzend können aber auch mehrere Züge mit zwei, drei oder mehr Absorberelementen fluidisch zueinander parallel angeordnet sein. Jedes Absorberelement ist aufgrund seiner Konstruktion und der daraus resultierenden hohen Temperatur an der Absorberwand-Basis grundsätzlich dazu in der Lage und geeignet, den gesamten Temperaturhub alleine zu leisten. Durch eine Parallelschaltung der Absorberelemente wird der Druckverlust in der Empfängerstruktur klein gehalten, und lassen sich hohe Flussraten realisieren.

Gemäß einer bevorzugten Ausgestaltung weist die Empfängerstruktur mindestens zwei Absorberzonen mit verschieden ausgebildeten Absorberelementen auf. Beispielsweise können zwei ringförmige Absorberzonen vorgesehen sein, wobei die untere Absorberzone durch ein turmnahes Heliostaten- Teilfeld und die obere Absorberzone durch ein turmfernes Heliostaten- Teilfeld angestrahlt wird. Die Absorberelemente der beiden Absorberzonen können sich beispielsweise in ihrer Geometrie und ihren Abmessungen voneinander unterscheiden. Beispielsweise können die Absorberelemente der Absorberzone, die von dem turmnahen Heliostaten- Teilfeld angestrahlt wird, eine geringere Höhe aufweisen, als die Absorberelemente der Absorberzone, die von den turmfernen Heliostaten- Teilfeld angestrahlt wird. Im Folgenden wird unter Bezugnahme auf die Zeichnungen ein Ausführungsbeispiel der Erfindung näher erläutert.

Es zeigen:
Figur 1 eine schematische Darstellung eines thermischen Solarturmkraftwerks mit einem zentralen Solarempfänger,
Figur 2 einen teilweisen Längsschnitt durch eine Empfängerstruktur des Solarempfängers der Figur 1,
Figur 3 eine Draufsicht auf die Empfängerstruktur einschließlich mehrerer Absorberelemente,
Figur 4 einen Längsschnitt durch ein Absorberelement, und

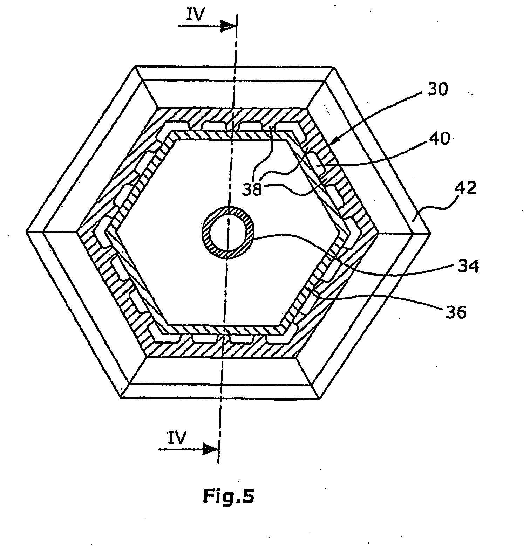

Figur 5 einen Querschnitt durch das Absorberelement der Figur 4.

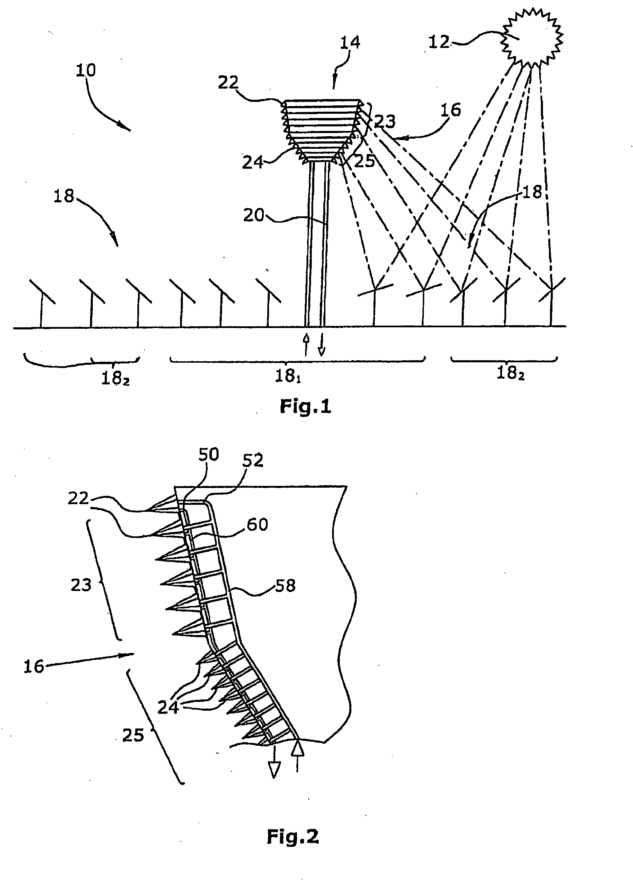

In der Figur 1 ist schematisch ein thermisches Solarturmkraftwerk 10 mit einem zentralen Solarempfänger 14 und einem Heliostaten-Feld 18 dargestellt. Das Heliostaten-Feld 18 ist in zwei Teilfelder gegliedert, nämlich in das annähernd kreisförmige turmnahe Heliostaten Feld 18₁ und das annähernd kreisringförmige turmferne Heliostaten-Feld 18₂. Jeder Heliostat weist einen oder mehrere Spiegel auf, der über eine entsprechende Stellmimik derart nachgeführt wird, dass die von der Sonne 12 kommende Sonnenstrahlung stets auf den Solarempfänger 14 gerichtet ist.

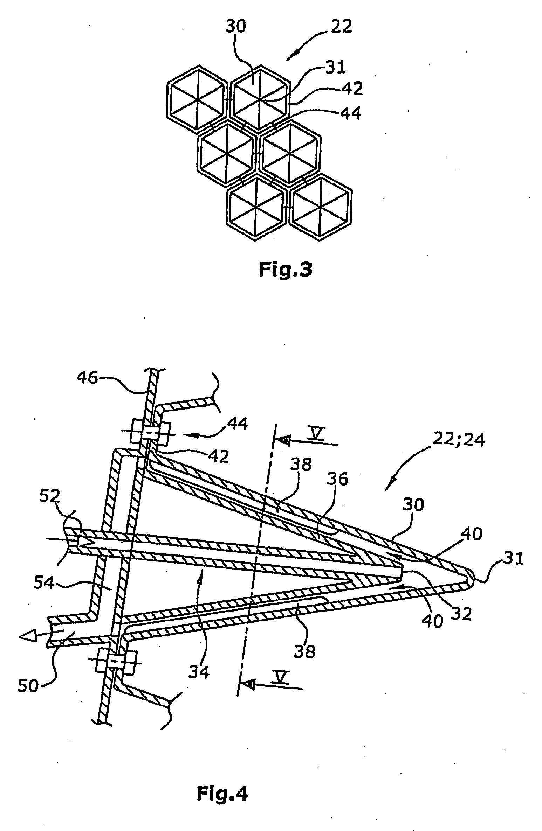

Der Solarempfänger 14 wird von einem Turm 20 in einer Höhe von 50-300 m gehalten. Die von dem Heliostaten-Feld 18 zu dem Solarempfänger 14 reflektierte Sonnenstrahlung wird in dem Solarempfänger 14 von einem Wärmeträger-Fluid absorbiert, das in einem geschlossenen Kreislauf durch eine Pumpe zu einer nicht dargestellten Generatorstation, und von dort wieder zurück zu dem Solarempfänger 14 gepumpt wird. Als Wärmeträger-Fluid dient vorliegend eine Salzschmelze In den Figuren 2 und 3 ist ein Teil des Solarempfängers 14 im Detail dargestellt. Der Solarempfänger 14 weist eine Empfängerstruktur 16 auf, die eine Vielzahl von Absorberelementen 22,24 aufweist. Die Empfängerstruktur 16 weist zwei ringförmige Absorberzonen 23,25 auf, die unmittelbar aneinander angrenzend übereinander angeordnet sind. Beide Absorberzonen 23,25 haben jeweils eine Grundfläche, die einen Kegelring beschreibt, wobei dieser bei der oberen Absorberzone 23 mit einer Neigung von ca. 10° zur Vertikalen weniger geneigt ist als bei der unteren Absorberzone 25 mit ca. 30° zur Vertikalen. Beide Absorberzonen 23,25 weisen jeweils eine Vielzahl einzelner Absorberelemente 22,24 auf, wobei die Absorberelemente 22 der oberen Absorberzone 23 größer sind als die der unteren Absorberzone 25. Im Übrigen sind der Aufbau und die Konstruktion der Absorberelemente 22,24 beider Absorberzonen 22,24 im Wesentlichen gleich.

Das Absorberelement 22 ist als sechsseitig gleichseitige Pyramide aufgebaut, so dass das Absorberelement 22 konvex ausgebildet ist und einen entsprechend geformten Innenraum abschirmt. Die Absorberelemente 22 sind wabenartig unmittelbar nebeneinander angeordnet, wie in der Figur 3 erkennbar ist. Das Absorberelement 22 weist eine äußere Absorberwand 30 auf, die die Form einer sechsseitigen Pyramide aufweist, wobei die Spitze der Pyramide von ihrem Scheitelpunkt 31 gebildet wird. An der Basis der Absorberwand ist ein umlaufender und in einer Querebene liegender Flansch 42 vorgesehen, der durch Fixierbolzen 44 auf einer Tragstruktur 46 derart festgeklemmt ist, dass sich die Absorberwand 30 im Rahmen ihrer wärmebedingten Ausdehnung auf der Tragstruktur 46 bewegen bzw. geringfügig verschieben kann. Die Außenseite der Absorberwand 30 ist schwarz, um möglichst viel Wärmestrahlung zu absorbieren.

Unmittelbar an die Innenseite der Absorberwand 30 angrenzend ist ein Fluid-Abflussraum 40 gebildet, der proximal durch eine ebenfalls gleichseitig sechsseitige und pyramidenförmige Innenwand 36 begrenzt ist. Auch der Fluid-Abflussraum 40 hat also im Wesentlichen die Form einer gleichseitig sechsseitigen Pyramide. Am distalen Ende der Innenwand 36 bzw. des Fluid-Abflussraums 40 ist eine Fluid-Einlassöffnung 32 vorgesehen, durch die das Wärmeträger-Fluid in den Fluid-Abflussraum 40 hinein fließt. Das Wärmeträger-Fluid wird durch eine Zuleitung 34 zu der Einlassöffnung 32 geleitet, wobei die Zuleitung 34 in der Symmetrieachse des Absorberelements 22 angeordnet ist. Beim Austritt des Wärmeträger-Fluids aus der Einlassöffnung 32 prallt das Fluid im Bereich des Scheitelpunkts 31 zunächst gegen die Innenseite der Absorberwand 30, und wird dabei in Richtung Abflussraum 40 umgelenkt.

Die Absorberwand 30 ist innenseitig nicht vollständig glattflächig ausgebildet, sondern weist in ihrem basisnäheren Bereich stoffschlüssig verbundene und radial nach innen in den Abflussraum 40 hineinragende Kühlstege 38 auf. Die Kühlstege 38 stehen in einer Längsebene des Absorberelements 22, stehen also ungefähr in Fließrichtung des in proximaler Fließrichtung abfließenden Wärmeträger-Fluids. Die Dicke der Kühlstege38 kann sich in proximaler Richtung stetig vergrößern, so dass sich der Gesamt-Querschnitt des Abflussraums 40 in proximaler Richtung nicht in dem Maße vergrößert, wie dies ohne die Kühlstege 38 der Fall wäre. Hierdurch kann in diesem Bereich die Fließgeschwindigkeit des Wärmeträger-Fluids relativ hoch gehalten werden.

Wie in der Figur 2 erkennbar ist, sind alle Absorberelemente 22,24 fluidisch parallel zueinander angeordnet, so dass der gesamte Temperaturhub des Wärmeträger-Fluids jeweils in einem einzigen Absorberelement 22,24 erfolgt. Es können alternativ auch Züge von jeweils zwei, drei oder mehr Absorberelementen fluidisch parallel zueinander angeordnet werden, um einen ausreichenden Temperaturschub zu realisieren.Die Einspeisung des Wärmeträger-Fluids in ein Absorberelement 22 erfolgt jeweils durch eine Zuleitung 52, die jeweils von einer Verteilerleitung 58 ausgeht. Das aus dem Absorberelement 22 abfließende Wärmeträger-Fluid fließt zunächst in einen kreisringförmigen Sammelraum 54, der dem Absorberelement 22 zugeordnet ist, und fließt von dort aus in eine Abflussleitung 50. Die Abflussleitungen 50 aller Absorberelemente 22,24 münden in eine Sammelleitung 60, von der aus das erhitzte Wärmeträger-Fluid schließlich zu der Generatorstation gepumpt wird.

Die Absorberelemente 22 haben beispielsweise eine Kantenlänge von 10 cm und einen Kegelwinkel von 15° zu ihrer Axialen.

## Patentansprüche

1. Solarturmkraftwerk-Solarempfänger (14) mit einer Empfängerstruktur (16), in der ein Wärmeträger- Fluid durch die Sonnenstrahlung erwärmt wird, wobei
die Empfängerstruktur (16) mehrere gleichförmige Absorberelemente (22) aufweist,
jedes Absorberelement (22) eine konvexe Absorberwand (30) aufweist, deren Außenseite die Sonnenstrahlung absorbiert,
innenseitig der Absorberwand (30) eine Fluid- Einlassöffnung (32) vorgesehen ist,
die Fluid- Einlassöffnung (32) im Bereich des Scheitelpunktes (31) der konvexen Absorberwand (30) angeordnet ist, und
innenseitig der Absorberwand (30) und angrenzend an die Absorberwand (30) ein Fluid- Abflussraum (40) vorgesehen ist, durch den das Fluid von der Einlassöffnung (32) entlang der Absorberwand (30) zu der Basis der Absorberwand (30) abfließen kann.

2. Solarturmkraftwerk-Solarempfänger (14) nach Anspruch 1, wobei die Absorberwand (30) innenseitig Kühlstege (38) aufweist.

3. Solarturmkraftwerk-Solarempfänger (14) nach einem der vorangegangenen Ansprüche, wobei der Grundriss der Absorberwand-Basis gleichseitig sechsseitig ist, wobei die Absorberwand (30) bevorzugt eine sechsseitige Pyramide bildet.

4. Solarturmkraftwerk-Solarempfänger (14) nach einem der vorangegangenen Ansprüche, wobei eine die Einlassöffnung (32) aufweisende Einlassleitung (34) und der Abflussraum (40) aller Absorberelemente (22) in Fluid- Flussrichtung abwärts geneigt sind.

5. Solarturmkraftwerk-Solarempfänger (14) nach einem der vorangegangenen Ansprüche, wobei mehrere Absorberelemente (22) fluidisch parallel zueinander angeordnet sind.

6. Solarturmkraftwerk-Solarempfänger (14) nach einem der vorangegangenen Ansprüche, wobei die Empfängerstruktur (16) mindestens zwei Absorberzonen (23,25) mit verschieden ausgebildeten Absorberelementen (22,24) aufweist.

## Claims

1. A solar receiver (14) for a solar tower power plant, having a receiver structure (16) in which a heat transfer fluid is heated by solar radiation, wherein
the receiver structure (16) comprises a plurality of uniform absorber elements (22),
each absorber element (22) has a convex absorber wall (30) whose outer side absorbs solar radiation,
a fluid inlet opening (32) is provided on the inner side of the absorber wall (30),
the fluid inlet opening (32) is arranged in the region of the apex (31) of the convex absorber wall (30), and
a fluid discharge space (40) is provided on the inner side of the absorber wall (30) and adjacent the absorber wall (30), through which space the fluid can flow off from the inlet opening (32) along the absorber wall (30) to the base of the absorber wall (30).

2. The solar receiver (14) for a solar tower power plant of claim 1, wherein the absorber wall (30) has cooling webs (38) on the inner side.

3. The solar receiver (14) for a solar tower power plant of one of the preceding claims, wherein the outline of the absorber wall base has the shape of an equilateral hexagon, the absorber wall (30) preferably forming a hexagonal pyramid.

4. The solar receiver (14) for a solar tower power plant of one of the preceding claims, wherein an inlet conduit (34) having the inlet opening (32) and the discharge space (40) of all absorber elements (22) are inclined downward in the direction of fluid flow.

5. The solar receiver (14) for a solar tower power plant of one of the preceding claims, wherein a plurality of absorber elements (22) is arranged fluidically in parallel with each other.

6. The solar receiver (14) for a solar tower power plant of one of the preceding claims, wherein the receiver structure (16) comprises at least two absorber zones (23, 25) with absorber elements (22, 24) of different designs.

## Revendications

1. Récepteur solaire (14) pour centrale à tour solaire, comprenant une structure de récepteur (16) dans laquelle un fluide caloporteur est chauffé par le rayonnement solaire,
la structure de récepteur (16) comprenant plusieurs éléments absorbeurs (22) uniformes,
chaque élément absorbeur (22) comprenant une paroi de l'absorbeur (30) convexe, dont la face extérieure absorbe le rayonnement solaire,
une ouverture d'admission de fluide (32) étant prévue sur la face intérieure de la paroi de l'absorbeur (30),
ladite ouverture d'admission de fluide (32) étant disposée dans la région du sommet de la paroi de l'absorbeur (30) convexe, et
un espace d'écoulement (40) étant prévu sur la face intérieure de la paroi de l'absorbeur (30) et adjacent à la paroi de l'absorbeur (30), ledit fluide s'écoulant à travers ledit espace à partir de ladite ouverture d'admission (32) le long de la paroi de l'absorbeur (30) jusqu'à la base de la paroi de l'absorbeur (30).

2. Récepteur solaire (14) pour centrale à tour solaire selon la revendication 1, dans lequel la paroi de l'absorbeur (30) comprend des nervures de refroidissement (38) sur la face intérieure.

3. Récepteur solaire (14) pour centrale à tour solaire selon l'une quelconque des revendications précédentes, dans lequel le plan de la base de la paroi de l'absorbeur présente six cotés équilatéraux, ladite paroi de l'absorbeur (30) formant, de préférence, une pyramide à six cotés.

4. Récepteur solaire (14) pour centrale à tour solaire selon l'une quelconque des revendications précédentes, dans lequel un conduit d'admission (34) comprenant ladite ouverture d'admission (32) et ledit espace d'écoulement (40) de tout les éléments absorbeurs (22) sont inclinés vers le bas selon la direction d'écoulement du fluide.

5. Récepteur solaire (14) pour centrale à tour solaire selon l'une quelconque des revendications précédentes, dans lequel plusieurs éléments absorbeurs (22) sont disposés fluidiquement en parallàle l'un à l'autre

6. Récepteur solaire (14) pour centrale à tour solaire selon l'une quelconque des revendications précédentes, dans lequel la structure de récepteur (16) comprend au moins deux zones d'absorbeur (23, 25) présentant des éléments absorbeurs (22, 24) de configuration différente l'une de l'autre.
